# EUROPEAN PATENT APPLICATION

(11) **EP 1 862 062 A2**
(43) Date of publication of application: **05.12.2007**
(21) Application number: 07252224.6
(22) Date of filing: 31.05.2007
(51) Int. Cl.: A01G 3/00, A01G 23/06

(54) **Cutler head with multiple mounts, bushing assembly and/or cooler assembly**

(30) Priority: 31.05.2006 US 809387 P; 08.09.2006 US 842998 P
(71) Applicant: Attachment Technologies, Inc.,, Cedar Rapids IA 52402 (US)
(72) Inventor: Edwards, John W, Tampa, Florida 33610 (US)
(74) Representative: Ratcliffe, Susan Margaret

(57) **Abstract**

A cutter head includes first and second mounts that are configured to allow coupling with various motive equipment, such as a tractor or an excavator. The first mount may be mounted on the rear of the cutter head chassis for coupling with the tractor, while the second mount may be mounted on the top of the cutter head chassis for coupling with the excavator. A pressure gauge includes an adjustment arrangement such that the position of the display of the pressure gauge can be adjusted for viewing of the operator of the tractor or excavator. The cutter head may include a cooler assembly that works off or in conjunction with a primary cooler assembly of the tractor or excavator. The cutter head may include an excavator linkage equipped with a bushing assembly.

## Description

### CROSS REFERENCE TO PRIORITY APPLICATIONS

This application claims the benefit of U.S. Provisional Application Nos. 60/809,387, filed May 31, 2006 and 60/842,998, filed September 8, 2006, each incorporated herein by reference in its entirety.

### BACKGROUND OF THE INVENTION

### 1. FIELD OF THE INVENTION

This invention relates to an industrial apparatus for use in mulching or cutting vegetation such as brush, trees, etc., or stump grinding. In particular, the invention relates to improvements to a cutter head in which the cutter head may include two or more mounts for connection with various equipment, such as an excavator or a tractor (with wheels or tracked belts), a bushing assembly, and/or a cooler or radiator assembly.

### 2. DESCRIPTION OF RELATED ART

Presently, there are two types of cutting heads available. The first type of cutting head is adapted for mounting onto an excavator, and the second type of cutting head is adapted for mounting onto a tractor. Both types of cutter heads may use a rotor and cutting elements as taught in co-pending U.S. non-provisional Patent Application No. 10/975,410, filed October 29, 2004, incorporated herein by reference in its entirety.

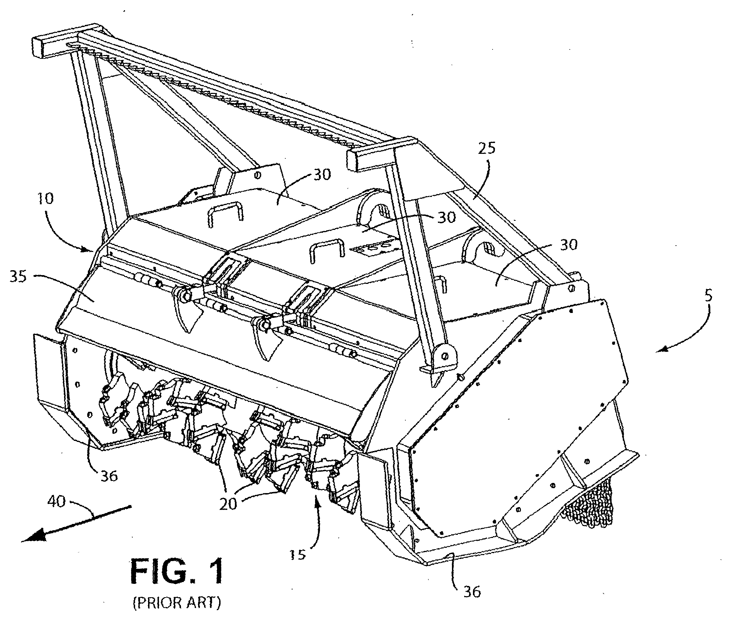

Figure 1 shows a prior art cutter head 5 for use with a tractor. The cutter head 5 includes a main body in the form of a chassis 10 that supports a rotor 15 with a plurality of cutting elements 20: The upper portion of the chassis 10 is provided with a push bar 25 to help push over vegetation while the cutting elements 20 engage and mulch/cut the vegetation. A plurality of access doors 30 are provided to allow selective access to the internal components, e.g., motors, belts, hydraulics, rotor, etc. A deflector 35 is provided (e.g., hinged) to the front side of the chassis. A pair of skid plates 36 are provided on each lateral side of the chassis 10. The arrow 40 indicates the intended cutting direction of the cutter head.

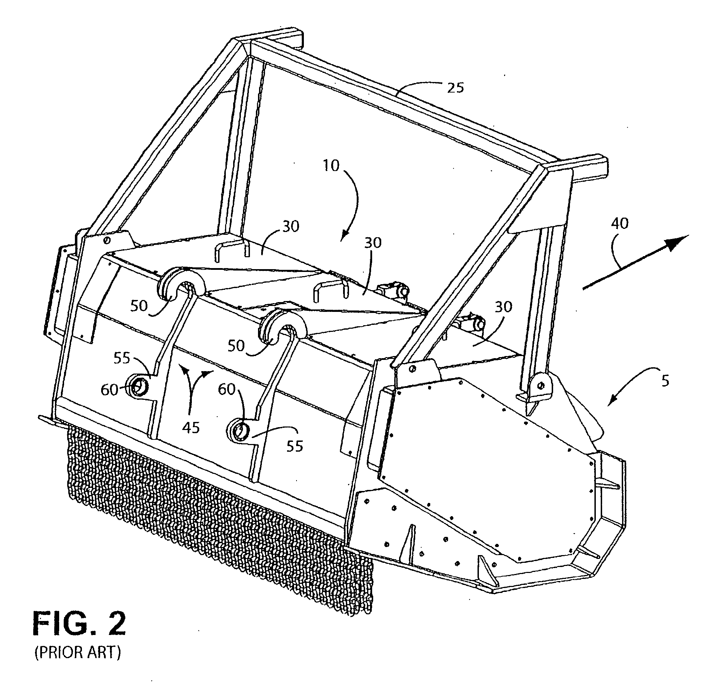

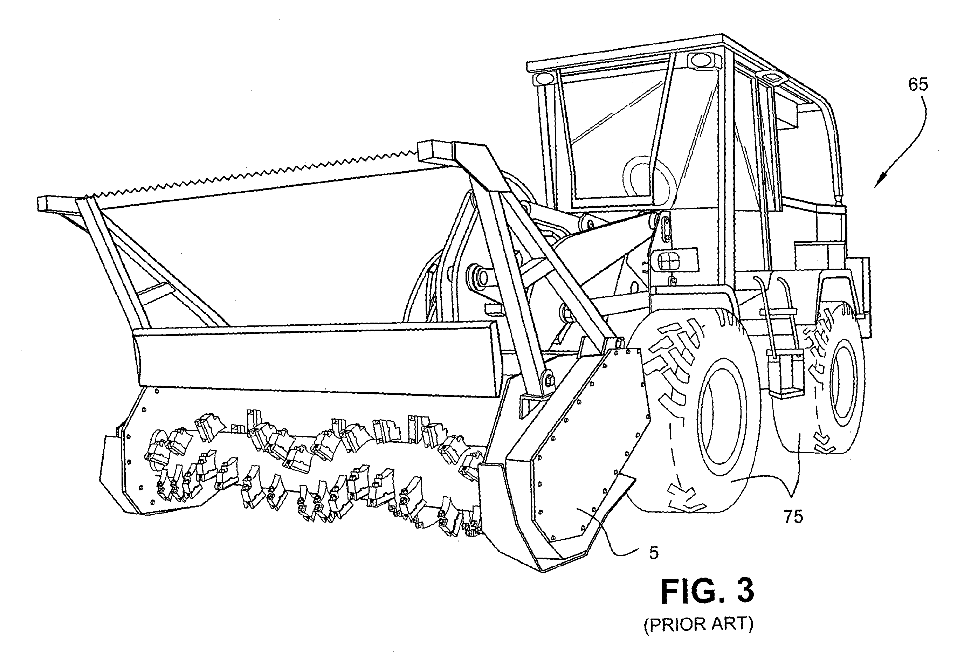

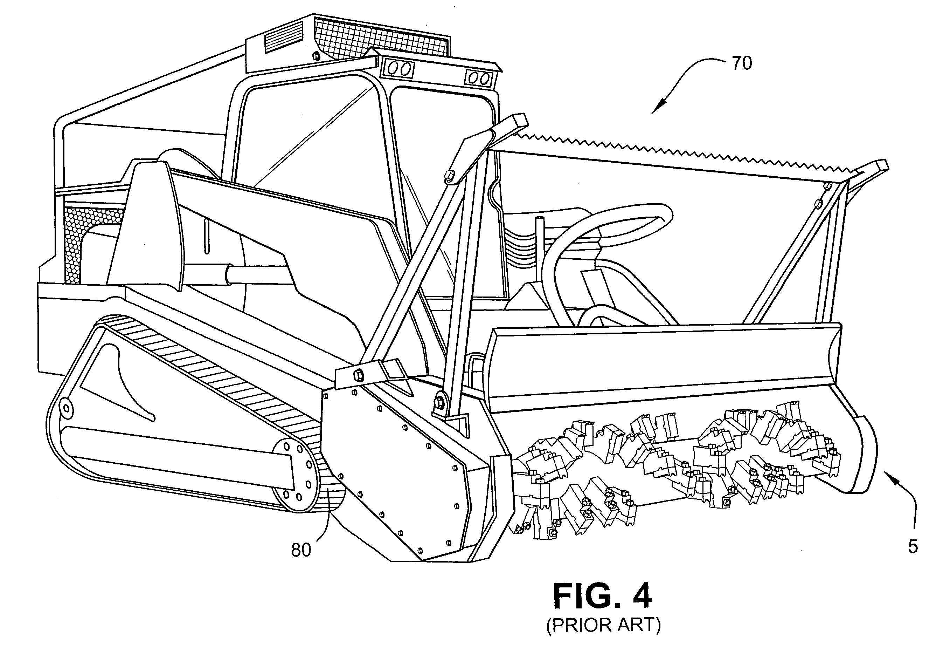

Figure 2 is a reverse perspective view of the cutter head 5 of Figure 1. The chassis 10 includes mounting structure 45 (e.g., at least one hook 50 and a flange 55 with a through hole 60) suitable of use with a tractor. Figures 3 and 4 show tractors 65, 70 that are coupled to the cutter head as shown in Figures 1 and 2. Figure 3 is a tractor with wheels 75 while Figure 4 is a tractor with a pair of tracked drive belts 80.

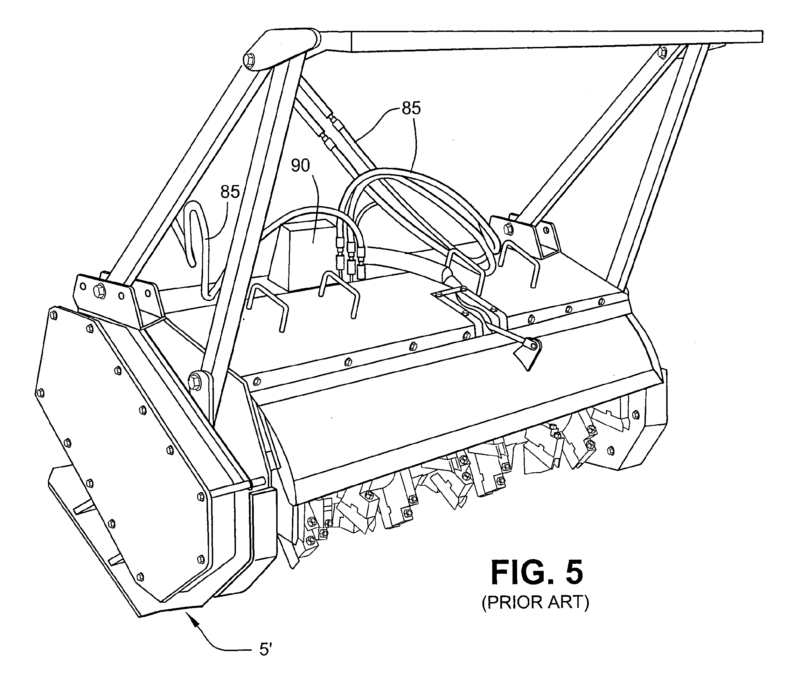

Figure 5 is a front view of a cutter head 5' that is similar to the cutter head 5 shown in Figures 1 and 2. However, Figure 5 shows various hydraulic tubes 85 for connection to the tractor. In addition, Figure 5 shows a pressure gauge 90 that has been attached or otherwise provided to or adjacent the upper portion of the chassis. The pressure gauge 90 is mounted in such an orientation as to allow the operator of a tractor to see the readout or display of the pressure gauge 90.

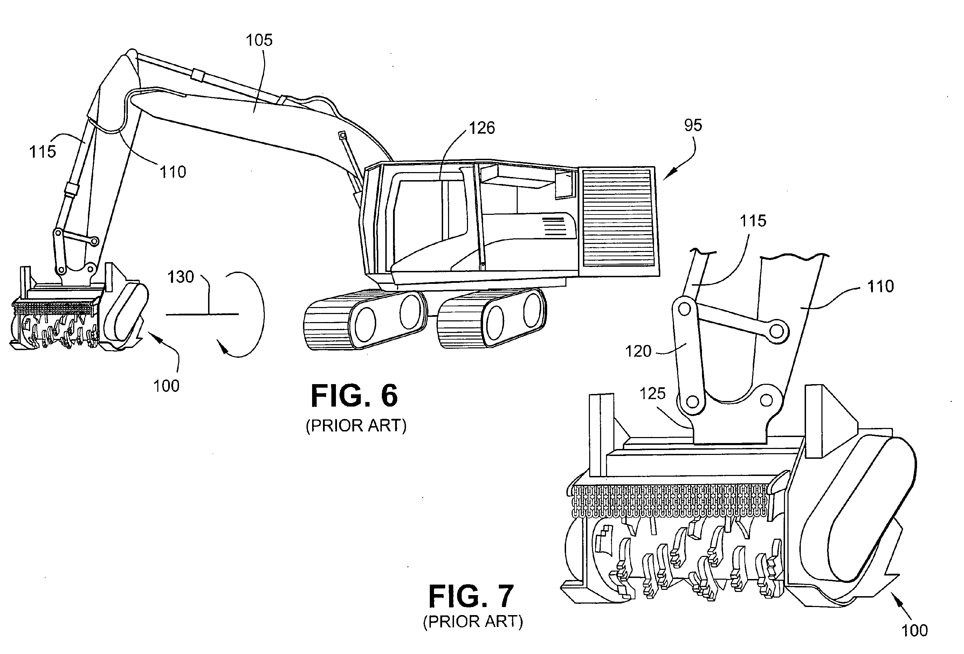

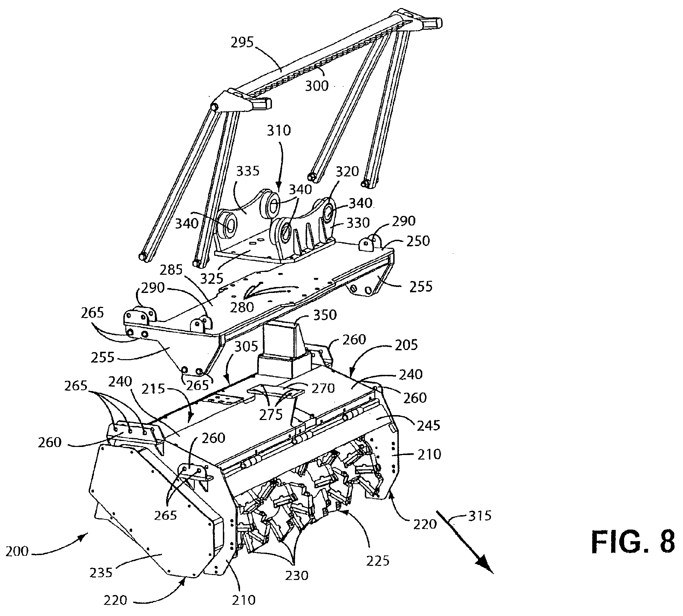

Figure 6 shows an excavator 95 having a cutter head 100 similar to the cutter head shown in Figures 1 and 2. However, because the excavator 95 has a different architecture, the mounting structure 45 shown in Figure 2 is not appropriate for use with the excavator 95. In particular, the excavator 95 has a main boom 105 and a secondary boom 110 that is pivotably mounted to the main boom. The secondary boom 110 is associated with a hydraulic actuator 115. As shown in Figure 7, the excavator 95 includes a linkage 120 that links the hydraulic actuator 115 to both the cutter head 100 and the secondary boom 105. The cutter head 95 includes a mounting structure 125 (in the general shape of an anvil), one portion of which is linked to the hydraulic actuator (or linkage thereof) and another portion that is linked to the secondary boom (or linkage thereof). In addition, the cutter head 95 may include a pressure gauge (not shown) that includes a display that can be read by the operator who is located in the cage 126 of the excavator shown in Figure 6. The display is oriented so as to be visible along the axis 130 of the rotor, or about 90 degrees compared to the orientation of the pressure gauge in Figure 5.

In practice it is not unusual for a contractor to purchase two types of cutter heads, one for use with a tractor and the other for use with an excavator. Excavators and tractors have various advantages and disadvantages, such that depending on the job at hand, the terrain, obstacles (e.g., highway guard rails, etc.) both types of heads will be needed. This is a disadvantage from the perspective of costs, because two cutter heads are required, and also because additional resources will be required to transport two cutter heads rather than one cutter head.

Accordingly, a need has developed in the art to address the above-noted deficiencies.

### BRIEF SUMMARY OF THE INVENTION

One aspect of the invention relates to providing a cutter head that is adapted to operate with two or more pieces of equipment with various cutter head support structures, e.g., a tractor or an excavator.

Another aspect is to provide an adapter for a cutter head that may be retrofit to existing cutter heads.

Another aspect is directed to a pressure gauge that is adjustably mounted to a cutter head.

Another aspect is directed to an excavator mount provided with a bushing assembly to accommodate for different size rods/bolts used in different excavators and/or different excavator linkages.

Another aspect is directed to a cooler assembly provided to the cutter head. The cooler assembly may be an independent circuit, or it may work in conjunction with a primary cooler assembly provided on the tractor or excavator.

According to one embodiment, there is provided a cutter head comprising a chassis; a cutting element provided to the chassis; a first mount provided to a rear portion of the chassis; and a second mount provided to a top portion of the chassis.

According to another embodiment, there is provided a pressure gauge comprising a base unit including mounting structure; a display associated with the mounting structure; and an adjustment mechanism to allow at least the display to be moved to two or more predetermined positions.

In still another embodiment, a method for cutting vegetation comprises providing a cutter head with first and second mounts; attaching the cutter head to a tractor via the first mount when using the tractor; and attaching the cutter head to an excavator via the second mount when using the tractor. The method may further include providing a pressure gauge to the cutter head; and adjusting the position of the pressure gauge depending on whether the cutter head is mounted to the excavator or the tractor.

In yet another embodiment, there is provided a cutter head comprising a chassis; a cutting element provided to the chassis; and an excavator mount provided to a top portion of the chassis, said excavator mount including a base plate and upstanding walls provided to front and rear sides of the base plate, each of the front and rear upstanding walls including a pair of spaced holes, each of said holes including a bushing assembly.

In another embodiment, there is provided a cutter head comprising a chassis; a cutting element provided to the chassis, said cutting element having a rotor engine; and a cutter head cooler assembly having a cutter head cooler provided to the chassis and in communication with said rotor engine.

These and other aspects of the invention will be described and/or apparent from the following detailed description of preferred embodiments.

### BRIEF DESCRIPTION OF THE DRAWINGS

Preferred embodiments of the invention will be described in conjunction with the following drawings, in which like reference numbers refer to like parts, and wherein:

FIGURE 1 is a front perspective view of a prior art cutter head;

FIGURE 2 is reverse perspective view of the prior art cutter head shown in Figure 1;

FIGURE 3 is a perspective view of a wheel-driven tractor with the cutter head shown in Figures 1 and 2;

FIGURE 4 is a perspective view of a belt-driven tractor with the cutter head shown in Figures 1 and 2;

FIGURE 5 is a perspective view of a prior cutter head;

FIGURE 6 is an excavator including a cutter head according to the prior art;

FIGURE 7 is a detail view of FIGURE 6 showing a cutter head mounting structure that links with a secondary boom and a hydraulic actuator of the excavator;

FIGURE 8 is an exploded perspective view of a cutter head according to an embodiment of the present invention;

FIGURE 9 is an assembled view of the cutter head shown in FIGURE 9;

FIGURE 10 is a partially assembled view of the cutter head shown in FIGURES 8 and 9, without the rotor, excavator mount, belt covers, etc.;

FIGURE 11 is a perspective view of a cutter head according to another embodiment of the present invention;

FIGURE 12 is a rear perspective view of a cutter head according to another embodiment of the present invention;

FIGURE 13 is an exploded perspective view of the excavator mount shown in Figure 12;

FIGURE 14 is an assembled perspective view of the excavator mount shown in Figure 13;

FIGURE 15 is a front perspective view of a cutter head according to another embodiment of the present invention;

FIGURE 16 is partial rear perspective view thereof;

FIGURES 16-1 and 16-2 are schematic diagrams showing coolant circuits according to sample embodiments of the present invention;

FIGURE 17 is a assembled perspective view of the cooler/cover combination shown in Figures 15 and 16;

FIGURE 18 is an exploded view thereof;

FIGURE 19 is a perspective view of the radiator bracket shown in Figure 18;

FIGURE 20 is a front perspective view of an access door having a bracket assembly according to an embodiment of the present invention; and

FIGURE 21 is a rear perspective view thereof with a cooler mounted on the bracket of Figure 20.

### DETAILED DESCRIPTION OF PREFERRED EMBODIMENTS

Figures 8-21 illustrate cutter heads constructed according to examples or embodiments of the present invention. The cutter head is intended to be releasably and selectively coupled or otherwise provided to various types of equipment, such as an excavator or a tractor, etc., each of which requires different mount for mounting the cutter head. In this specification, the term cutter head is inclusive of grinders, wood chippers, tub grinders and horizontal grinders, etc. While several embodiments of the invention are described, it is to be understood that one or more components of one embodiment may be combined with one or more components of another embodiment to form additional embodiments. Moreover, each feature, component or subcomponent of each embodiment may form an independent aspect of the present invention.

Figure 8 shows a cutter head 200 including a chassis 205 having lateral side walls 210 and a top or central portion 215 interconnecting the lateral side portions 210. Each lateral side wall 210 is associated with a skid plate assembly 220. A rotor 225 with a plurality of cutting heads 230 is rotatably mounted between the lateral side walls 210, like the arrangement shown in Figures 1 and 2. One or both ends of the chassis 205 includes a cover member 235 to house pulleys, motor shafts, and/or belts that connect the motor(s) to the rotor. One or more access doors 240 are provided to allow selective access to the motor and other components. A deflector 245 is provided, e.g., hingedly attached, to the top or central portion 215.

An adapter plate 250 is coupled or otherwise provided to the chassis 205. In the example illustrated, the adapter plate 250 includes lateral depending wall members 255 that can be coupled to the chassis 205 via a pair of mounting brackets 260 provided on or adjacent the lateral side walls 210 of the chassis 205. The depending walls 255 and the brackets 260 include one or more holes or apertures 265 that can be aligned and threaded with a fixing device, such as a nut and/or bolt (not shown), etc.

The chassis 205 also includes an upstanding central support 270 that is designed to support a central portion of the adapter plate 250 between the lateral side walls 210. The support 270 may include one or more apertures 275 that align with corresponding apertures 280 in the adapter plate 250, to allow positive coupling via a fixing device.

An upper surface 285 of the adapter plate includes a plurality of brackets 290 designed to support a push bar 295. The push bar 295 may include a serrated edge 300 and is adapted to contact with vegetation (e.g., trees, etc.) so that the vegetation is directed away from the operator (especially in the case where the cutter head is used with a tractor) and/or better exposed to the cutting elements on the rotor 225. The push bar 295 need not be used, especially where an excavator (Figures 6 and 7) is used.

The cutter head 200 is associated with first 305 and second 310 mounts. It is also possible that three or more mounts could be provided to the cutter head. The first mount 305 is for use with a tractor as shown in Figures 3 and 4. In particular, the first mount 305 has a structure like the mount shown in Figure 2. The first mount 305 is located on the rear surface (relative to the cutting direction 315) of the cutter head 200 shown in Figure 8. The first mount 305 includes one or more coupling units, each coupling unit including a hook oriented towards a rear of the chassis and a flange oriented towards a rear of the chassis. The flange includes at least one through hole. The first or second mount may include other or additional configurations, e.g., magnetic, etc.

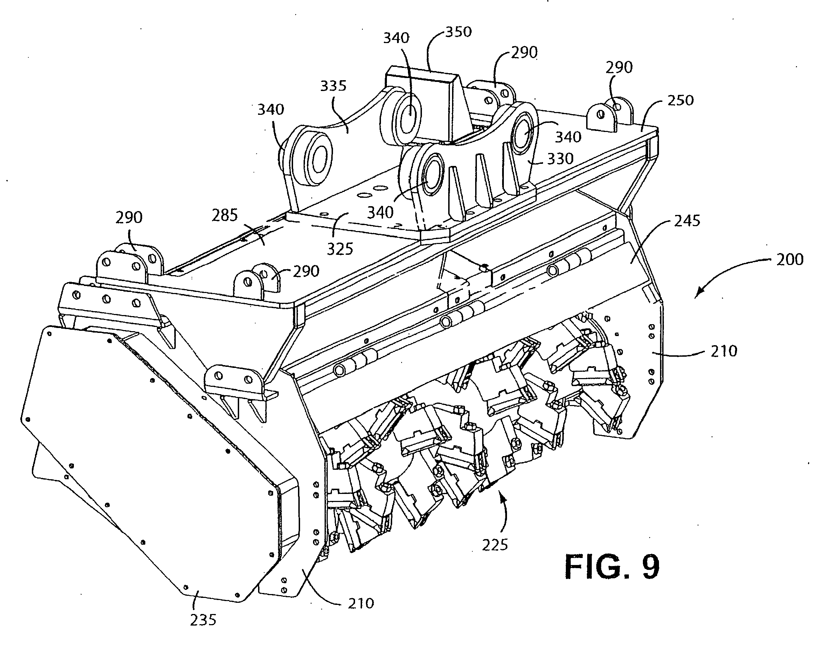

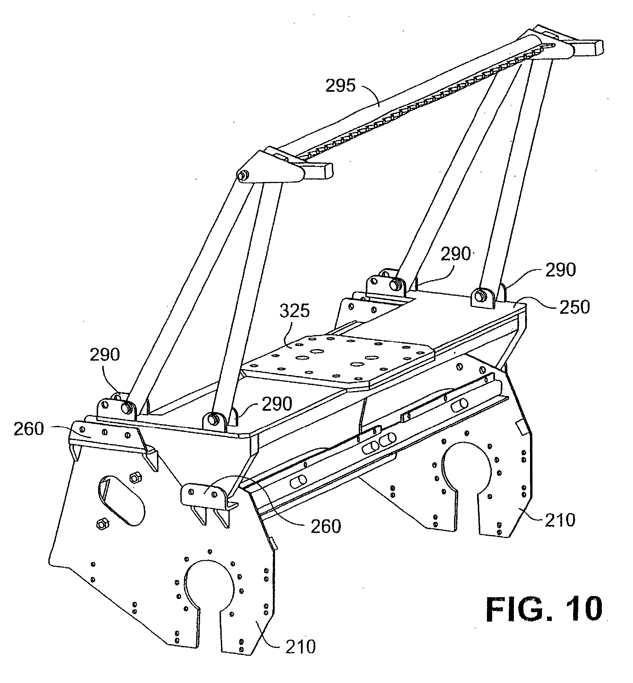

The second mount 310 is in the form of an excavator mount 320 that is mounted using bolts, etc., to the adapter plate 250 shown in Figure 8. The excavator mount 320 includes a mounting linkage having a base plate 325 and upstanding walls 330, 335 provided to front and rear sides of the base plate, respectively, each of the front and rear walls 330, 335 preferably having an anvil type shape and including a pair of spaced holes 340. The second mount 310 enables the cutter head 200 to be implemented using an excavator as shown in Figures 6 and 7. Figure 9 is an assembled view of the cutter head 200 of Figure 8, while Figure 10 is a partial assembled view of the cutter head, with several of the components removed for clarity, e.g., the rotor, excavator adapter, covers, motor components, hydraulics, etc. The push bar 295 may be mounted in two or more positions relative to the adapter plate, as is evident from Figures 9 and 10.

A pressure gauge 350 is adjustably mounted to the chassis 205, e.g., via an adjustment mechanism. The position of the pressure gauge or a portion thereof, e.g., the display or readout, can be adjusted. For example, the pressure gauge can be moved from the position shown in Figure 8 (which is oriented for use with an excavator) to the equivalent of the position shown in Figure 5 (for use with a tractor).

The adjustment mechanism can take several forms, such as a ball and socket joint, a swivel joint, etc., or the chassis can simply be designed such that the pressure gauge or a portion thereof can be mounted in one of two positions, approximately 90 apart relative to one another, to allow the operator in the driver's seat a clear view. This can be achieved by providing holes on the chassis and the base of the pressure gauge that align when provided in the viewing position. The pressure gauge 350 is lockable in each of the two or more viewing positions using a fixing device, such as bolts, magnetic attraction, etc. The pressure gauge may be rotatable or otherwise movable in and between the two positions. Alternatively, the pressure gauge can be detachably mounted to the chassis so as to be mountable in one of the two positions. The adjustment device may include a set screw that can be loosened to allow adjustment and tightened in a plurality of viewing positions.

The adjustment device may include a pin and slot arrangement whereby the pin and slot are disengaged to allow adjustment and the pin and slot are engaged to allow locking of the pressure gauge relative to the chassis. The adjustment device may include a resilient member or spring (e.g., a spring that biases the pin into engagement with one of a plurality of slots) to maintain engagement between the pin and the slot when positioned in one of a plurality of predetermined positions.

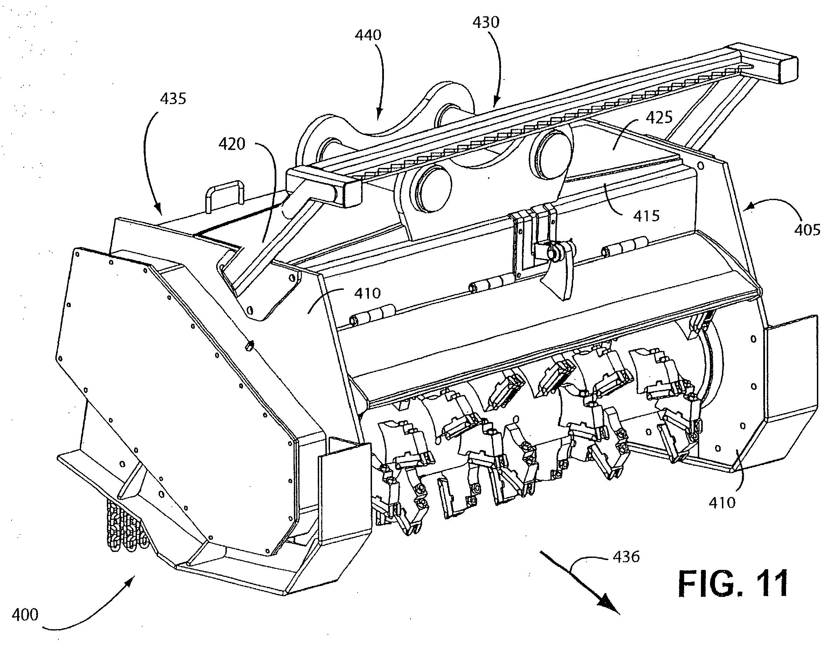

Figure 11 is a perspective view of a cutter head 400 according to another embodiment of the present invention. Figure 11 includes a chassis 405 with two lateral side walls 410 and a top or central portion 415. The lateral side walls 410 have a relatively thick gauge as compared to the side walls in prior embodiments. A push bar 420 is attached to the side walls 410. An adapter plate 425 is affixed, e.g., welded to the chassis 405, and extends at least partly between the two lateral side walls 410. The adapter plate 425 includes or is otherwise associated with an excavator mount 430. The rear side 435 of the chassis (relative to the cutting direction 436) includes another mount 440 (e.g., like shown in Figure 2) for interfacing with a tractor, such as the tractors shown in Figures 4 and 5. In one example, the cutter head of Figures 1 and 2 can be modified to include the welded adapter plate of Figure 11. As such, the adapter plate 425 can be sold as part of a kit to allow retrofitting of existing cutter heads to include a second mount.

According to another aspect, there is provided a method for cutting vegetation comprising providing a cutter head with first and second mounts; attaching the cutter head to an excavator via the first mount when using the excavator; and attaching the cutter head to a tractor via the second mount when using the tractor. Optionally, a pressure gauge may be provided to the cutter head, and the position of the pressure gauge could be adjusted depending on whether the cutter head is mounted to the excavator or the tractor.

In accordance with the above description, a cutter head is provided with first and second mounts to allow for implementation of the cutter head with various equipment, such as an excavator or a tractor, each of which has different cutter head support structure. As such, it is not necessary to purchase a separate cutter head for each piece of equipment, which can save costs because the costs of a single cutter head (e.g., see the embodiments of Figures 8-11) is far less expensive than the cost of two cutter heads shown in Figures 1-2 and 6-7, respectively. In addition, the cost and inconvenience of transporting two cutter heads rather than one is eliminated.

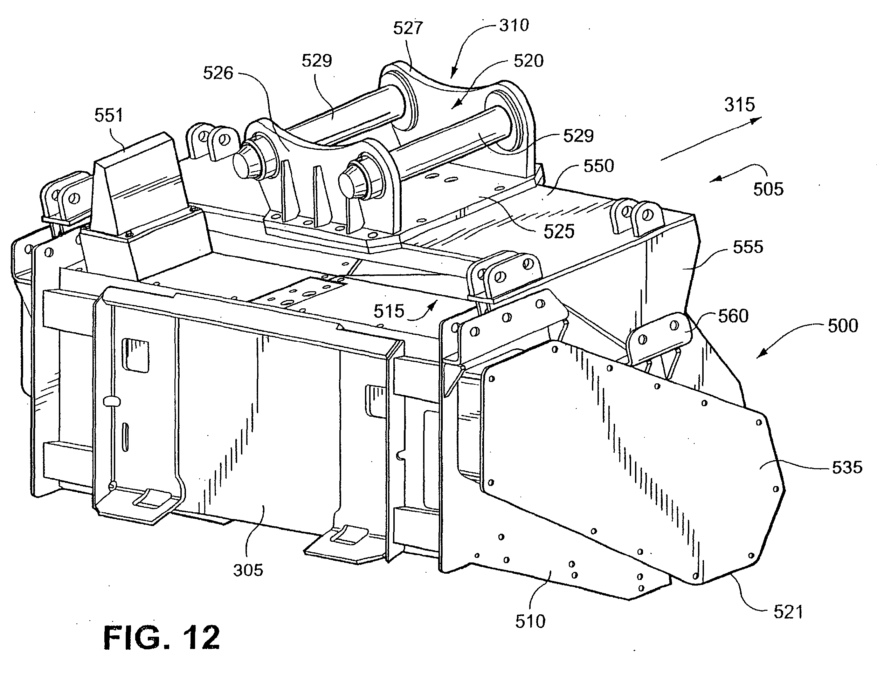

Figure 12 shows a cutter head 500 including a chassis 505 having lateral side walls 510 and a top or central portion 515 interconnecting the lateral side portions 510. Each lateral side wall 510 is associated with a skid plate assembly 521. A rotor (not shown) with a plurality of cutting heads is rotatably mounted between the lateral side walls 510, like the arrangement shown in Figure 8. One or both ends of the chassis 505 includes a cover member 535 to house pulleys, motor shafts, and/or belts that connect the motor(s) to the rotor.

An adapter plate 550 is coupled or otherwise provided to the chassis 505. In the example illustrated, the adapter plate 550 includes lateral depending wall members 555 that can be coupled to the chassis 505 via a pair of mounting brackets 560 provided on or adjacent the lateral side walls 510 of the chassis 505. The depending walls 555 and the brackets 560 include one or more holes or apertures that can be aligned and threaded with a fixing device, such as a nut and/or bolt (not shown), etc. One or more access doors are provided below adapter plate 550 to allow selective access to the motor and other components.

The chassis 505 may also include an upstanding central support (like that shown in Figure 8) that is designed to support a central portion of the adapter plate 550 between the lateral side walls 510. Adapter plate 550 may also be designed to support a push bar (not shown) and a pressure gauge 551 in an adjustable manner, as described above.

The cutter head 500 is associated with first 305 and second 310 mounts. The first mount 305 is for use with a tractor as shown in Figures 3 and 4. In particular, the first mount is located on the rear surface (relative to the cutting direction 315) of the cutter head 500 shown in Figure 12. The first mount 305 includes one or more coupling units. The first or second mount may include other or additional configurations, e.g., magnetic, etc.

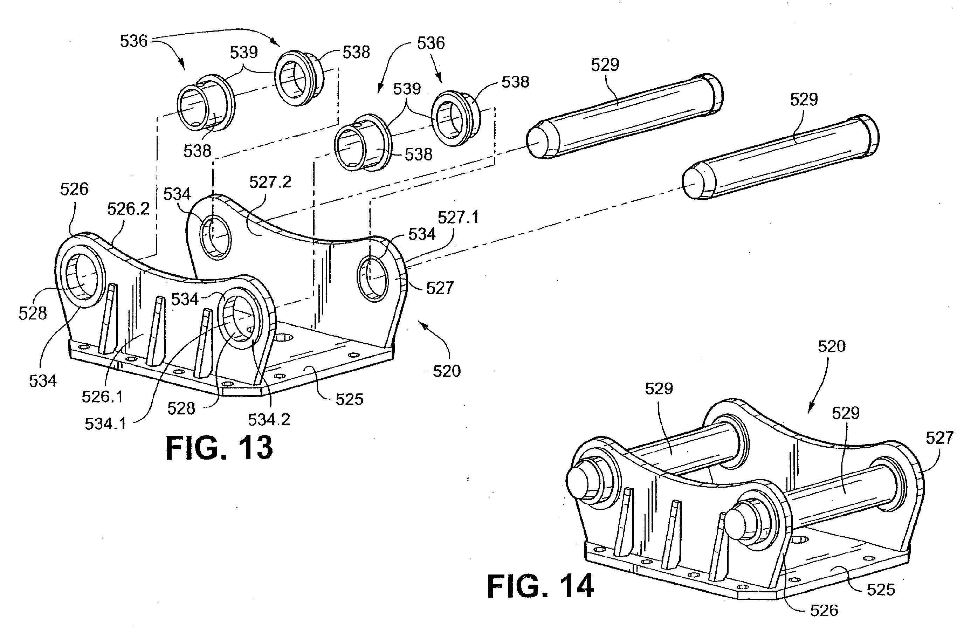

The second mount 310 is in the form of an excavator mount 520 that is mounted using bolts 529, etc., to the adapter plate 550 shown in Figure 12. The excavator mount 520 includes a mounting linkage having a base plate 525 and upstanding walls 526, 527 provided to front and rear sides of the base plate, respectively, each of the front and rear walls preferably having an anvil type shape and including a pair of spaced holes 528 (see Figure 13). The second mount 310 enables the cutter head 500 to be implemented using an excavator as shown in Figures 6 and 7.

As shown in Figures 13 and 14, the excavator mount 520 includes a bushing assembly including a welded-in bushing 534 and a press fit bushing 536 for each hole 528. Each welded-in bushing 534 includes a cylindrical portion 534.1 and a flanged portion 532.2. The flanged portion 534.2 is larger than the diameter of the hole 528 and is mounted on an outside surface 526.1, 527.1 of the walls 526, 527. The welded-in bushing 534 is generally welded to the hole.

Similarly, each press fit bushing 536 includes a cylindrical portion 538 and a flange 539 provided to one end of the cylindrical portion 538. As shown in Figure 13, the flange is provided on an inside surface 526.2, 527.2 of the mount 520, i.e., between the two walls 526, 527. A detent assembly may be provided such that the bolts/rods 529 "click" into place, thereby locking the assembly and providing audio feedback to the operator that a connection has been established. The detent assembly may include a recess or hole provided to either the bushing 536 or the rod 529, and a spring loaded ball bearing provided to the other of the bushing or the rod.

In use, the diameter of the rods/bolts 529 can vary depending on the manufacturer of the excavator. Therefore, the size of the holes 528 in the side walls would need to be changed to suit with the particular size of the rods/bolts being used for any given excavator. This can be problematic, especially if the cutter head is to be used with two or more excavators having different rod sizes.

By contrast, the holes 528 are formed with a uniform diameter, generally the same size as or larger than the largest diameter rod/bolt. The size of the hole 528 is adaptable to the size of the bolt/rod, using the bushing assembly. The bushings 534, 536 may be provided in a number of different sizes so as to accommodate all available diameter sizes of the rod/bolt used in current excavators.

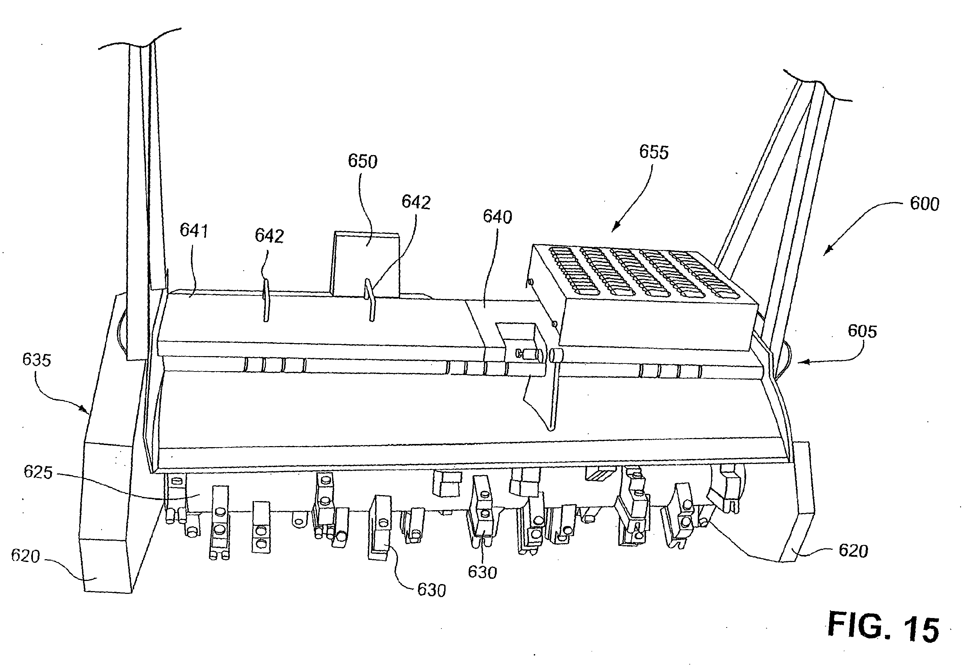

Figures 15-21 illustrate a cutter head according to another embodiment of the present invention. Figure 15 shows a cutter head 600 including a chassis 605 having lateral side walls and a top or central portion interconnecting the lateral side portions. Each lateral side wall is associated with a skid plate assembly 620. A rotor 625 with a plurality of cutting heads 630 is rotatably mounted between the lateral side walls, like the arrangement shown in Figure 8. The rotor is driven or powered by a rotor engine supported by chassis 605. One or both ends of chassis 605 includes a cover member 635 to house pulleys, motor shafts, and/or belts that connect the engine/motor(s) to the rotor. One or more access doors 640, 641 are provided to allow selective access to the motor and other components. Door 641 includes a pair of handles 642.

The cutter head 200 is associated with at least a tractor mount positioned on the rear side of the cutter head. The cutter head may also include an excavator mount, as described above. A pressure gauge 650 may be adjustably mounted to the chassis 605, as described above.

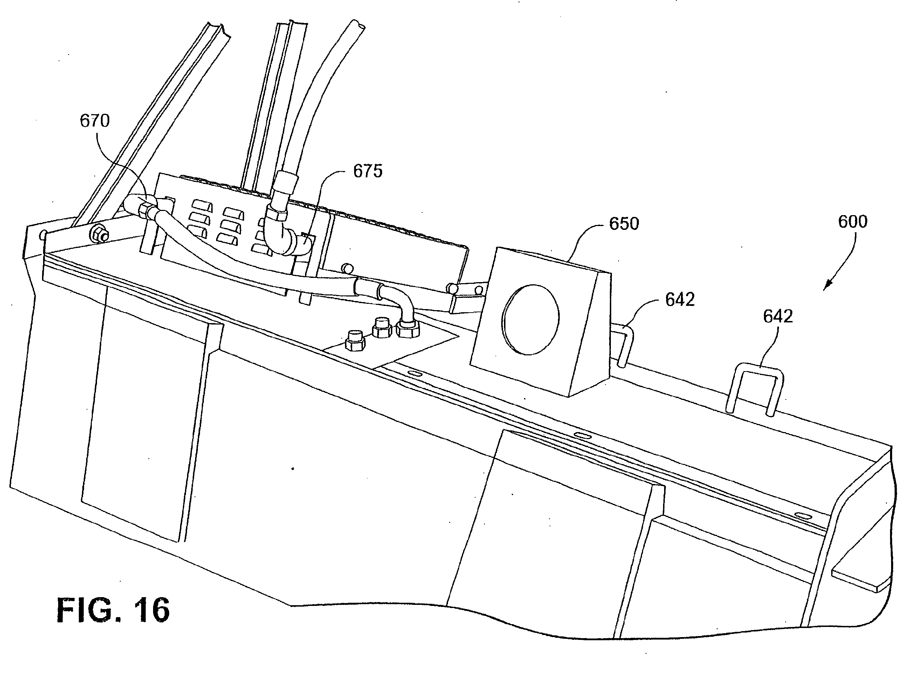

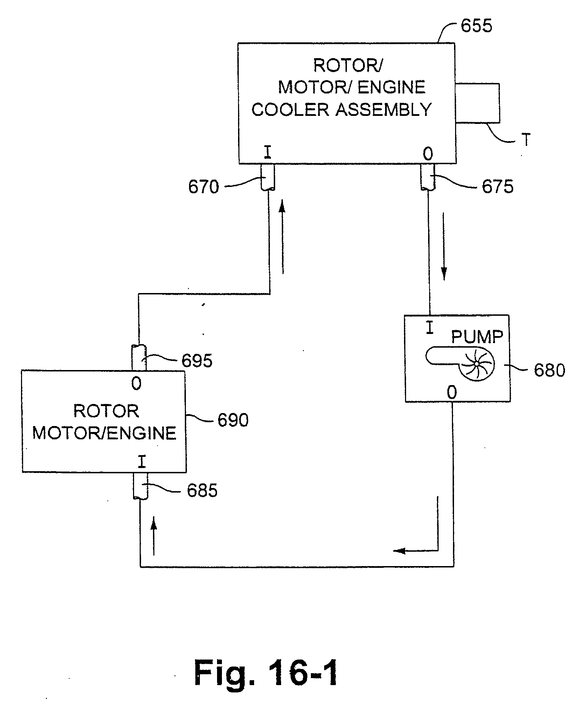

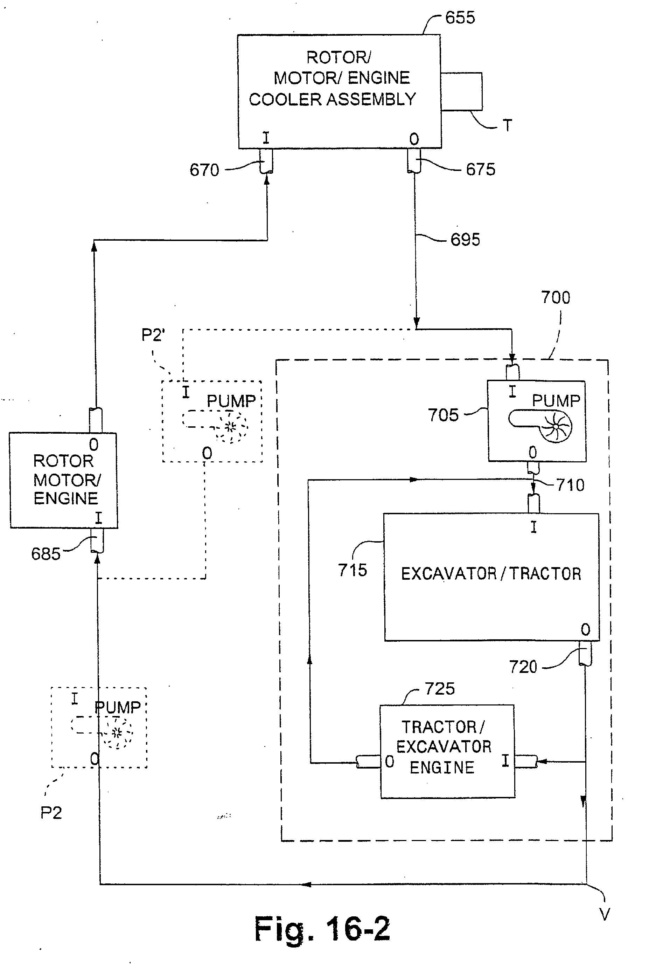

A cooler or radiator assembly 655 may be provided to the chassis 605. In the example shown, the cooler assembly is mounted to access door 640. Figure 16 is a partial rear perspective view of the cutter head, showing further details of the cooler assembly. Cooler assembly includes an inlet 670 (that receives high temperature coolant from the motor/engine of the mulcher head) and an outlet that conveys the coolant after it has been cooled down by the cooler coils or fins.

In one embodiment shown in Figure 16-1, the cooler assembly 655 is part of an independent cooling circuit in which the relatively cooler coolant from the outlet 675 is re-circulated (e.g., with a pump 680) directly to the inlet 685 of the rotor motor/engine 690 of the cutter head 600. Coolant exits the outlet 695 of the rotor motor/engine 695 and returns to the inlet 670 of the cooler assembly 655. As such, the pump 680 can be mounted or otherwise provided somewhere in or on the chassis 605 or even within the cooler cover. Pump 680 may be provided either upstream or downstream of the rotor motor/engine 690.

In another embodiment shown in Figure 16-2, the cooler assembly outlet 675 channels coolant via a return hose 695 to the source of motive power, e.g., the tractor or excavator, for handling by a primary coolant circuit 700 of the tractor or excavator. Thus, a pump 705 of the motive power source pumps the high temperature coolant of the cutting head cooler assembly to an inlet 710 of a primary cooler assembly or radiator 715 of the motive power source. An outlet 720 of the primary cooler assembly 715 is channeled to the motor or engine 725 of the motive power source, which in turn is channeled back to the inlet 710 of the primary cooler assembly 715. In addition, coolant from the outlet 720 of the primary cooler assembly 715 is channeled to the inlet 685 of the rotor motor/engine of the cutter head 600. The high temperature coolant is channeled from the outlet 695 of the rotor motor/engine to the inlet 670 of the cutter head cooler assembly. In the embodiments of both Figures 16-1 and 16-2, a thermostat T may be provided, in conjunction with various valves V, etc., to modulate or regulate the temperature of the cooler assembly or assemblies. In the embodiment of Figures 16-2, a second pump may be provided to the cutter head, which pump can operate either in series (pump P2) or in parallel (pump P2') with the primary pump 705 of the source of motive power.

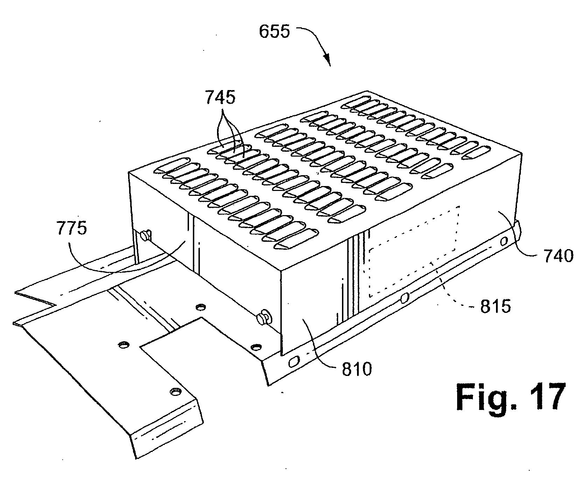

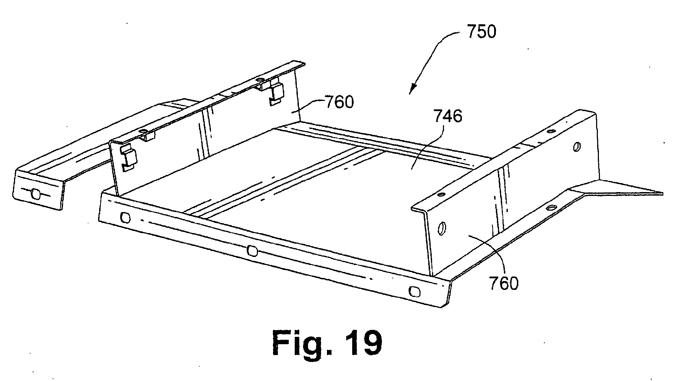

As shown in Figure 17, cooler assembly 655 includes a cover 740 that includes a number of vent openings 745 on the top and/or side walls thereof. The cover 740 is mounted on an access door 746, e.g., via a bracket assembly 750 (shown in combination with access door in Figure 19). Access door 746 includes an opening 755 to access a hydraulically actuated rod (not shown) to control the position of a deflector plate. Bracket assembly 750 includes a pair of side walls 760 that are mounted to or otherwise provided to the access door 746. The cover 740 may include one or more handles to facilitate handling. Each side wall 760 includes a pair of bolts 765 that engage with respective recesses 770 in the bottom edge of each lateral side wall 775 of the cover. Bracket assembly 750 also supports fins or coils 780, e.g., via a bracket 781 and bolts 782. A cooler 790 of the cooler assembly 655 includes fins/coils 780, as well as the inlet and outlet 670, 675. Cooler assembly 655 may include a fan 785 that is supported on the cooler 790 using one or more pin supports 795 that are received in corresponding brackets 800 on the cooler 790. Fan 785 draws ambient air over the coils or fins 780, to accelerate and/or maximize cooling. Cooler assembly 655 may also include one or more filters.

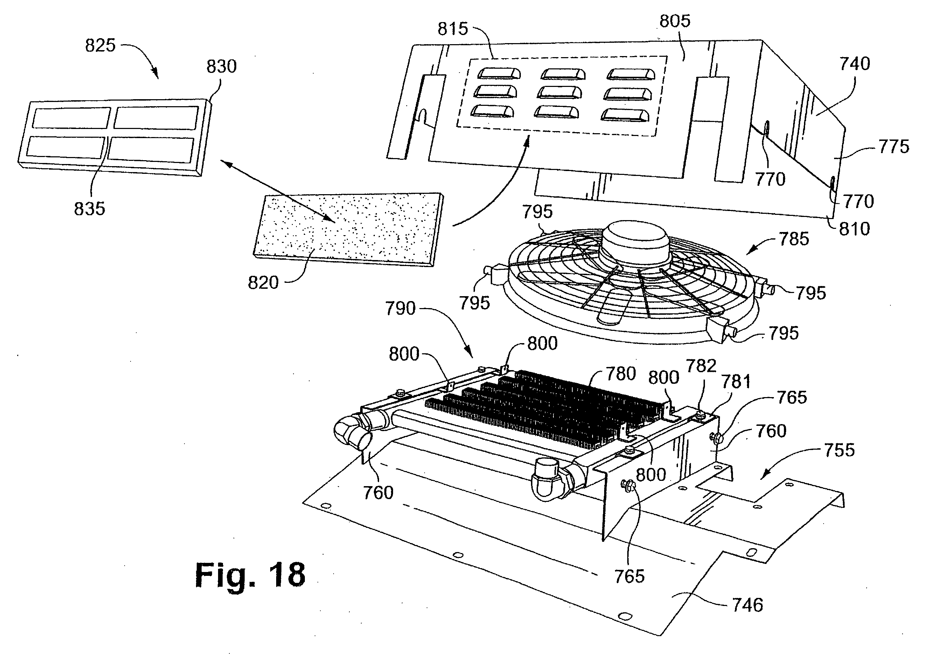

In one embodiment, the cooler is arranged such that intake air is taken in from the front and rear walls 805, 810 of the cover 740. In this example, the vent holes on each wall 805, 810 (Figure 18) can be converted into a single large opening 815 (see the dotted lines in Figure 18) which is provided with a filter 820 or filter cartridge, insert, a filter holder and a filter, etc. In the case of the holder 825 and filter 820, the holder 825 may have a grid-like structure, or simply a rectangular, flanged perimeter 830 with a cross support 835. The holder 825 is structured to be releasably attachable to the cover 740. The fan 785 (hydraulic or electric) draws in air from the front and rear walls (past the filter(s)) such that the air is drawn from beneath and across the coils or fins 780, and the air is exhausted through the vent holes/apertures 745 on the top surface of the cover. In this example, one or more seals is provided to ensure proper channeling of the intake air beneath and across the fins/coils 780.

In another embodiment, the cooler can be oriented or rotated 90° compared to the arrangement in Figure 17, in which case the intake and exit pipes may need to be re-routed in corresponding degrees.

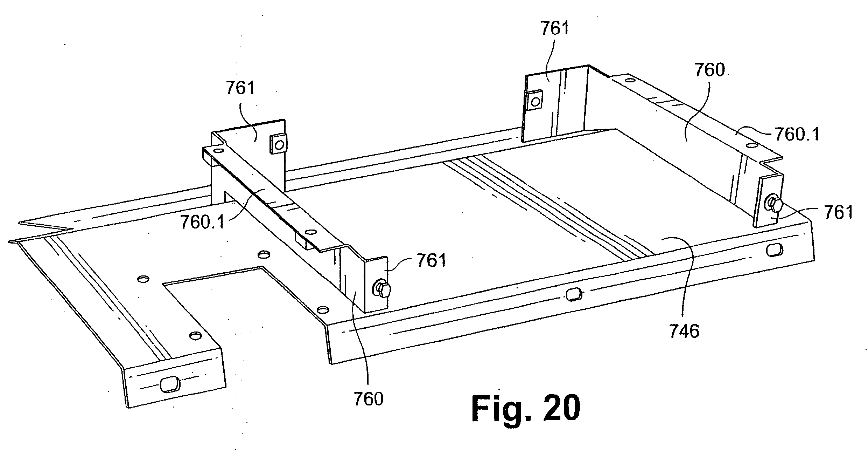

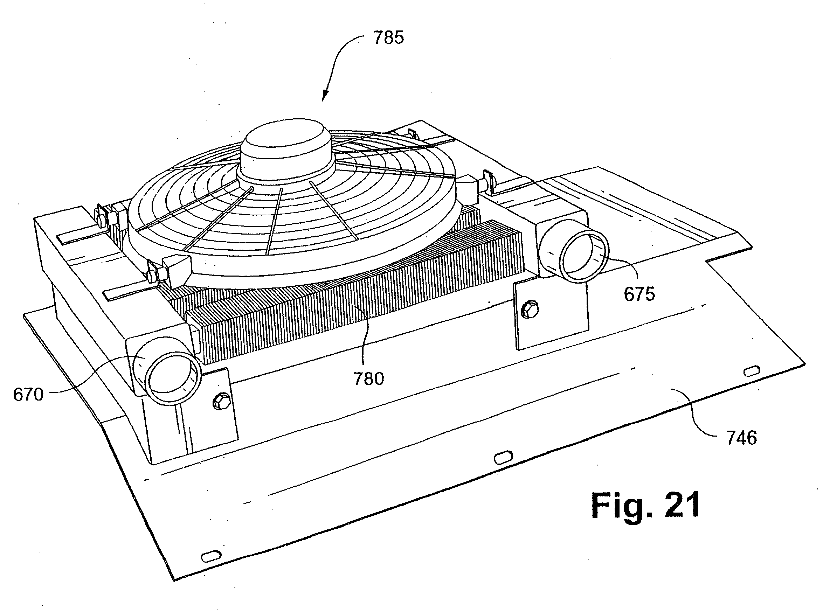

Figures 20-21 illustrate an access door and bracket assembly combination according to another embodiment of the present invention. Access door 746 is similar to access door described in relation to Figure 19. Bracket assembly includes upstanding walls 760 extending from an outer surface of the access door 746. Walls 760 include outwardly oriented flanged upper portions 760.1 and angled front and rear portions 761. As seen in Figure 21, rear angled portions support the inlet 670 and outlet 675 of the cooler.

While the invention has been described in conjunction with preferred embodiments thereof, it is evident that many alternatives, modifications and variations may be apparent to those skilled in the art. Accordingly, preferred embodiments of the invention as set forth herein are intended to be illustrative, not limiting. Various changes may be made without departing from the spirit and scope of the present invention.

## Claims

1. A cutter head comprising:
a chassis;
a cutting element provided to the chassis;
a first mount provided to a rear portion of the chassis; and
a second mount provided to a top portion of the chassis.

2. The cutter head according to claim 1, wherein the cutting element includes a rotor and a plurality of cutters fixedly attached to the cutting element.

3. The cutter head according to any one of claims 1-2, wherein the first mount comprises a tractor mount and the second mount comprises an excavator mount.

4. The cutter head according to claim 3, further comprising an adapter plate fixed to the chassis and the excavator mount is coupled to the adapter plate.

5. The cutter head according to claim 4, wherein the adapter plate is welded to the chassis.

6. The cutter head according to any one of claims 3-5, wherein the excavator mount includes a mounting linkage having a base plate and upstanding walls provided to front and rear sides of the base plate, each of the front and rear upstanding walls including a pair of spaced holes.

7. The cutter head according to any one of claims 4-6, further comprising a push bar coupled to the adapter plate.

8. The cutter head according to claim 7, wherein the adapter plate includes mounting structure to allow adjustable mounting of the push bar.

9. The cutter head according to any one of claims 1-8, wherein the first mount includes a pair of laterally spaced coupling units, each coupling unit including a hook oriented towards a rear of the chassis and a flange oriented towards a rear of the chassis, the flange including at least one through hole.

10. The cutter head according to any one of claims 1-9, further comprising a pressure gauge provided to the chassis, wherein the pressure gauge is adjustably mounted to the chassis to be selectively movable in at least two positions approximately 90 degrees relative to one another.

11. A tractor comprising:
a source of motive power;
a main body to support an operator;
cutter head support structure extending from the main body; and
a cutter head according to any one of claims 1-10, in which the first mount is coupled to the cutter head support structure.

12. The tractor according to claim 11, wherein the source of motive power includes a plurality of wheels.

13. The tractor according to claim 11, wherein the source of motive power includes a pair of tracked belts.

14. An excavator comprising:
a main body to support an operator;
cutter head support structure extending from the main body; and
a cutter head according to any one of claims 1-10, in which the second mount is coupled to the cutter head support structure.

15. A pressure gauge comprising:
a base unit including mounting structure;
a display associated with the mounting structure; and
an adjustment mechanism to allow at least the display to be moved to two or more predetermined positions.

16. The pressure gauge according to claim 15, wherein the adjustment mechanism comprises a ball and socket joint.

17. The pressure gauge according to claim 15, wherein the adjustment mechanism comprises a swivel joint.

18. The pressure gauge according to any one of claims 15-17, wherein the two positions are approximately 90 degrees apart relative to one another.

19. The pressure gauge according to any one of claims 15-18, wherein the pressure gauge is lockable in each of the two or more positions.

20. The pressure gauge according to any one of claims 15 or 17-19, wherein the pressure gauge is rotatable in and between the two or more positions.

21. The pressure gauge according to any one of claims 18-20, wherein the pressure gauge is detachably mountable so as to be mountable in one of the two positions.

22. The pressure gauge according to any one of claims 15-21, wherein the adjustment mechanism includes a set screw that can be loosened to allow adjustment and tightened in the two or more positions.

23. The pressure gauge according to claims 15-21, wherein the adjustment device includes a pin and slot arrangement whereby the pin and slot are disengaged to allow adjustment and the pin and slot are engaged to allow locking of the pressure gauge relative to a chassis.

24. The pressure gauge according to claim 23, wherein the adjustment mechanism includes a resilient member or spring to maintain engagement between the pin and the slot when positioned in one of a plurality of predetermined positions.

25. An excavator or tractor comprising:
a main body to support an operator;
a cutter head support structure extending from the main body;
a cutter head supported by the cutter head support structure; and
the pressure gauge of any one of claims 15-24.

26. A method for cutting vegetation comprising:
providing a cutter head with first and second mounts;
attaching the cutter head to an excavator via the first mount when using the excavator; and
attaching the cutter head to a tractor via the second mount when using the tractor.

27. The method according to claim 26, further comprising providing a pressure gauge to the cutter head; and
adjusting the position of the pressure gauge depending on whether the cutter head is mounted to the excavator or the tractor.

28. A cutter head comprising:
a chassis;
a cutting element provided to the chassis; and
an excavator mount provided to a top portion of the chassis, said excavator mount including a base plate and upstanding walls provided to front and rear sides of the base plate, each of the front and rear upstanding walls including a pair of spaced holes, each of said holes including a bushing assembly.

29. The cutter head according to claim 28, wherein the bushing assembly includes a first bushing welded to each hole and second bushing press fit into each said hole.

30. The cutter head according to claim 29, wherein each said bushing has a cylindrical portion and a flanged portion.

31. The cutter head according to any one of claims 28-30, further comprising a detent assembly to releasably engage a securing rod/bolt relative to the bushing assembly.

32. An excavator comprising:
a source of motive power;
a main body to support an operator;
a cutter head support structure extending from the main body; and
a cutter head according to any one of claims 28-31.

33. The excavator according to claim 32, wherein the source of motive power includes a plurality of wheels.

34. The excavator according to claim 32, wherein the source of motive power includes a pair of tracked belts.

35. A cutter head comprising:
a chassis;
a cutting element provided to the chassis, said cutting element having a rotor engine; and
a cutter head cooler assembly having a cutter head cooler provided to the chassis and in communication with said rotor engine.

36. The cutter head according to claim 35, further comprising an access door mounted to the chassis, said cutter head cooler being mounted on the access door via a bracket assembly.

37. The cutter head according to claim 36, wherein said bracket assembly includes at least one wall welded, fixed or otherwise provided to said access door.

38. The cutter head according to claim 37, wherein said at least one wall includes at least one fixture for securing the cooler.

39. The cutter head according to claim 37, wherein said at least one fixture include at least one bolt.

40. The cutter head according to any one of claims 35-39, further comprising a cutter head fan to draw air past coils or fins of the cooler.

41. The cutter head according to claim 40, wherein the fan is mounted or otherwise provided to the cooler.

42. The cutter head according to any one of claims 35-41, wherein the cooler includes an inlet and an outlet and a plurality of coils or fins.

43. The cutter head according to any one of claims 35-42, further comprising a rotor engine pump to circulate coolant trough the rotor engine cooler.

44. The cutter head according to any one of claims 35-43, wherein the cooler includes a cover having a top vent opening and at least one intake provided in a side wall of the cover.

45. The cutter head according to claim 44, further comprising a holder provided to the intake and a filter provided to said holder.

46. The cutter head according to any one of claims 35-45, further comprising at least a first mount provided to the chassis.

47. The cutter head according to claim 46, further comprising a second mount provided to the chassis.

48. A tractor or excavator comprising:
a source of motive power;
a main body to support an operator; and
a cutter head according to any one of claims 35-47.

49. The tractor or excavator according to claim 48, further comprising a primary cooler assembly, said primary cooler assembly comprising a primary cooler having an inlet and an outlet, said outlet being structured to channel coolant to the rotor motor/engine, said inlet being configured to receive coolant from said cutter head cooler.

50. The tractor or excavator according to claim 49, wherein said primary cooler assembly further includes a primary pump positioned on the source of motive power.

51. The tractor or excavator according to claim 50, wherein said primary pump is adapted to work in conjunction with a cutter head pump of said cooler assembly.

52. The tractor or excavator according to claim 50, wherein said primary pump is adapted to work in series with said cutter head pump.

53. The tractor or excavator according to claim 51, wherein said primary pump is adapted to work in parallel with said cutter head pump.
